Europäisches Patentamt

European Patent Office  (11) Publication number: **0 172 424**

Office européen des brevets  **A2**

## (12) EUROPEAN PATENT APPLICATION

(21) Application number: **85109132.2**

(22) Date of filing: **22.07.85**

(51) Int. Cl.⁴: **B 60 M 1/20**

(30) Priority: **25.07.84 IT 2205484**

(43) Date of publication of application:
**26.02.86 Bulletin 86/9**

(84) Designated Contracting States:
**AT BE CH DE FR GB LI LU NL SE**

(71) Applicant: **Pastro, Vittorio**
**21, Via Calamatta**
**I-20137 Milano(IT)**

(72) Inventor: **Pastro, Vittorio**
**21, Via Calamatta**
**I-20137 Milano(IT)**

(74) Representative: **Gervasi, Gemma et al,**
**Studio Brevetti e Marchi NOTARBARTOLO & GERVASI**
**33, Viale Bianca Maria**
**I-20122 Milano(IT)**

(54) **New type of staggering rod for overhead electric traction contact lines.**

(57) Staggering rods for overhead electric traction contact lines, constituted by stainless steel tubes of square cross-section.

In order to enable their cross-sections to assume a different shape while maintaining adequate rigidity, the two ends of the rod are reinforced by inserting into each of them a piece of tube of square cross-section having a lesser side, then flattening, or they are firstly flattened and then introduced into pieces of rectangular tube and welded in the inserted section, or alternatively there is disposed at one end a suitable hook having a shank of square cross-section which is introduced into the rod and welded in order to make it rigid therewith.

Said rods have the advantage of lightness and corrosion resistance compared with those used in the known art.

./...

EP 0 172 424 A2

FIG 1

- 1 -

NEW TYPE OF STAGGERING ROD FOR OVERHEAD ELECTRIC TRACTION CONTACT
LINES

This invention relates to a new type of staggering rod for overhead electric traction contact lines.

More particularly the invention relates to a type of staggering rod for overhead electric traction contact lines which, compared with the type used in the known art, has the advantage of lightness and corrosion resistance.

For electrically supplying the motors of tramway and railway trains, it is known to dispose a contact line suspended at a suitable height above the track, and from which, by means of current take-offs, the vehicle electrical equipment draws the energy necessary for its operation.

For high speeds, the railway contact line is formed from a load-bearing cable which rests on supports (poles with brackets) and one or two contact wires hung from the cable by means of vertical hangers, which are located a short distance from each other in order to reduce the sag in the conductors, and below which the current take-off (pantograph) passes. In this manner, the position of the contact wires is properly adjusted vertically in order to prevent jerking at the sliding current take-offs, with consequent wear by mechanical and electrical effect.

In addition, at the supports the contact wires are secured horizontally to the supports themselves by means of staggering rods, which have the following purposes:

- to prevent the contact wires from oscillating horizontally by the effect of the wind;
- to give the contact wires the off-setting required by the path of the track when on a bend or at particular points;
- to give the contact wires a zig-zag pattern in a horizontal plane along their straight portions in order to prevent the wires wearing the pantograph at a single point and cutting it, as they would do if kept perfectly coaxial to the track.

The staggering rods of the known art consist of galvanised round iron bars which are fixed at one end to the supports by porcelain or synthetic material insulators, and at the other end to the contact wires by clamps using a bolt.

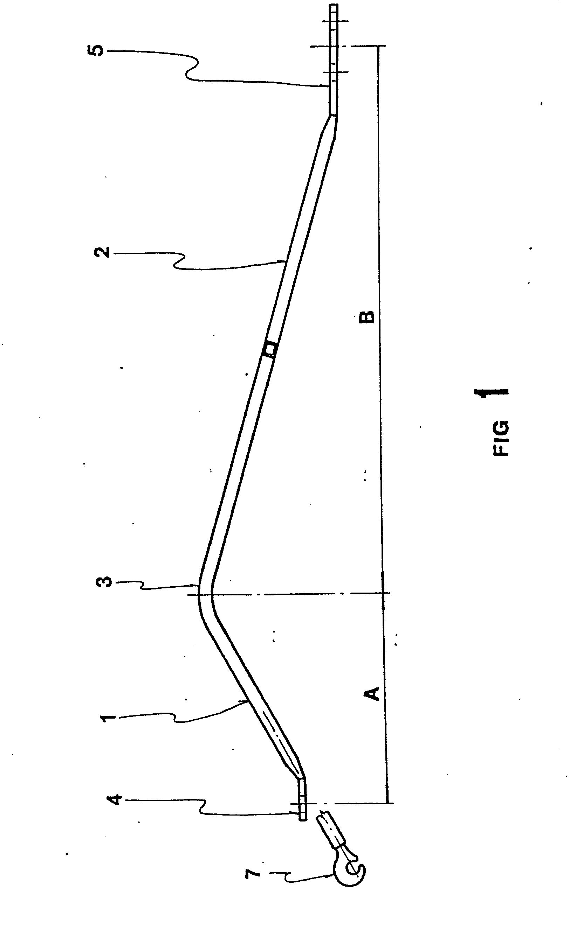

As in the case of Figure 1 which refers to the rod according to the invention, these comprise two segments 1 and 2 joined together by an arc 3 and having a total projected length which is generally of 900 mm divided into a portion A of 252 mm and a portion B of 648 mm. The portions A and B obviously have different lengths as the total length of the rod varies.

The weight of the staggering rods of the known art is considerable, being in general between 1.2 and 2.0 kg, and a large part of this, exceeding 50%, acts on the contact wires with damaging effects in terms of wire wear which compromises the operation of the contact line.

Moreover, said staggering rods require frequent maintenance because of oxidation phenomena which occur particularly at their connection to the insulator, where the zinc plating is corroded rapidly, including by friction.

In order to prevent corrosion phenomena, which are more accentuated in sea zones and in tunnels, the rods have also been constructed of copper, but this further aggravates the problem of their weight.

We have now discovered a new type of staggering rod which obviates the drawbacks encountered in the use of staggering rods of the known art.

In particular, using the staggering rods according to the invention, the weight exerted by the rods on the contact wires is drastically reduced, and corrosion phenomena are totally prevented.

These advantages are obtained by the use of the staggering rods for overhead electric traction contact lines according to the present invention, which are characterised by consisting of stainless steel tubes of square cross-section having their two ends reinforced by the insertion, into each of said ends, of a piece of tube of lesser side, followed by flattening the said ends, or by initially flattening said ends followed by their insertion into pieces of rectangular tube, after which the inserted section is welded; or alternatively at one end there is disposed a suitable hook having a shank of square cross-section which is introduced into the rod and welded in order to make it rigid therewith.

These and further characteristics and advantages of the staggering rods according to the present invention will be more apparent from the detailed description given hereinafter of preferred embodiments of said rods by way of non-limiting example.

The staggering rods according to the invention are constituted by stainless steel tubes of square cross-section having an outer side of between 12 and 20 mm and preferably of between 12 and 16 mm and a thickness of preferably between 1 and 2 mm.

The rod weight can thus be contained within the range of 0.55-0.75 kg, against the 1.2-2 kg of the rod of the known art.

Referring to the reference numerals shown on Figures 1, 2 and 3, the square cross-section must be modified to rectangular at the ends 4 and 5 in order to define a segment suitable for receiving the through bores for the screws or pins.

This would result in a weakening of the structure due to the bringing-together of surfaces subjected to combined compressive and bending stress.

We have found that this drawback is overcome by inserting into the terminal part of the square tube a piece of stainless steel tube of square cross-section having a side which is less than the former and having a length of 60-120 mm, and then pressing to obtain the flattened end with a doubled thickness of stainless steel and thus with a doubled mechanical strength.

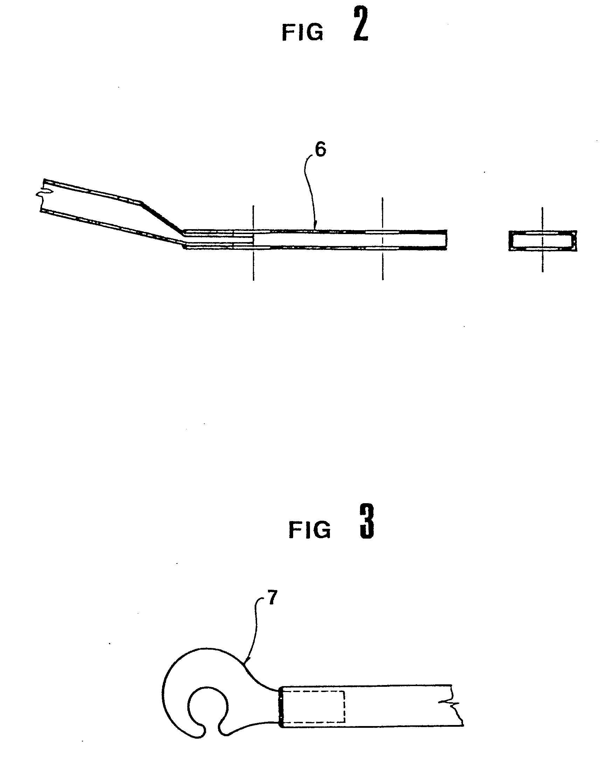

Alternatively, the two ends 4 and 5 are firstly flattened and then inserted into pieces of rectangular tube 6 and welded in the insertion section, as shown in Figure 2.

Furthermore, a suitable hook 7 with a shank of square cross-section can be disposed at one end by being inserted into the rod and welded to make it rigid therewith, as shown in Figures 1 and 3.

The mechanical characteristics of the stainless steel staggering rods according to the present invention are entirely comparable with those of galvanised iron rods.

In this respect, comparing a rod formed from a stainless steel tube of square cross-section having an inner side of 13 mm and outer side of 16 mm with a rod formed from a round galvanised iron bar of diameter 16 mm, the ultimate tensile stress and resisting moment values shown in the following table are found:

|  | Ultimate tensile stress $(kg/mm^2)$ | Resisting moment $(mm^3)$ |
|---|---|---|
| Tube (Stainless steel) | 50-65 | 386 |
| Round bar (Galvanised iron) | 30-50 | 401 |

It should be noted that a hypothetical staggering rod formed from stainless steel tube having a circular cross-section of the same diameter would have a considerably lower resisting moment so that a correspondingly greater diameter would be required, with a relative increase in weight and overall size.

As is apparent from the aforegoing description, the staggering rod according to the present invention has the particular advantage of bearing to a much lesser extent on the contact wire than the rods currently in use.

Furthermore, any possibility of oxidation is obviated by the rod according to the invention.

From the cost aspect it should be noted that the rod according to the invention is competitive with the conventional rod with regard to production and installation costs, whereas it results in considerable savings in terms of maintenance and of the life of the rod itself and of the contact wire concerned.

PATENT CLAIMS

1.     Staggering rods for overhead electric traction contact lines, characterised by being constituted by stainless steel tubes of square cross-section having their two ends reinforced to enable their cross-sections to assume a different shape while maintaining adequate rigidity.

2.     Staggering rods as claimed in claim 1, characterised in that said end reinforcement is effected by inserting into each of the ends a piece of tube of lesser side followed by flattening said ends.

3.     Staggering rods as claimed in claim 1, characterised in that said end reinforcement is effected by firstly flattening the ends then introducing them into pieces of rectangular tube.

4.     Staggering rods as claimed in claim 1, characterised in that in one of said ends there is disposed a suitable hook with a shank of square cross-section which is introduced into the rod and welded to make it rigid therewith.

5.     Staggering rods as claimed in claim 1, characterised in that said stainless steel tubes have a square cross-section with an outer side of between 12 and 20 mm and preferably of between 12 and 16 mm.

6.     Staggering rods as claimed in claim 1, characterised in that said stainless steel tubes have a thickness preferably of between 1 and 2 mm.

7.     Staggering rods as claimed in claim 1, characterised in that said pieces of tube of lesser side, which are inserted into each of the two ends, have a length of between 60 and 120 mm.

8.     Staggering rods as claimed in claim 1, characterised in that said flattening of the two reinforced ends is effected by pressing.

FIG 1

0172424

FIG 2

FIG 3